# EUROPÄISCHE PATENTANMELDUNG

(11) **EP 4 173 457 A1**
(43) Veröffentlichungstag der Anmeldung: **03.05.2023**
(21) Anmeldenummer: 21205290.6
(22) Anmeldetag: 28.10.2021
(51) Int. Cl.: A01B 33/06, A01B 61/04, A01B 35/24

(54) **ANORDNUNG MIT EINEM ARBEITSWERKZEUG ZUR BODENBEARBEITUNG FÜR EINE LANDWIRTSCHAFTLICHE MASCHINE SOWIE LANDWIRTSCHAFTLICHE MASCHINE**

(71) Anmelder: Kverneland A/S, 4353 Klepp St (NO)
(72) Erfinder: KOTTENSTEDDE, Gregor, 4353 Klepp Stasjon (NO)
(74) Vertreter: Bittner, Thomas L.

(57) **Zusammenfassung**

Die Erfindung betrifft eine Anordnung mit einem Arbeitswerkzeug zur Bodenbearbeitung für eine landwirtschaftliche Maschine, aufweisend: ein Rahmenbauteil; ein Arbeitswerkzeug (1) zur Bodenbearbeitung mit einer Arbeitsspitze (2), die im Betrieb mit einem zu bearbeitenden Boden in Kontakt tritt, wobei das Arbeitswerkzeug (1) an dem Rahmenbauteil um eine zu einer Fahrtrichtung quer verlaufende erste Schwenkachse (3) schwenkbar angeordnet ist, derart, dass das Arbeitswerkzeug (1) beim Schwenken des Arbeitswerkzeugs (1) einen Abstand zum Rahmenbauteil ändert; und eine Vorspannvorrichtung (7), die mit einer Druck-Federeinrichtung gebildet ist, welche dem Arbeitswerkzeug (1) zugeordnet und eingerichtet ist, das Arbeitswerkzeug (1) mittels einer Vorspannkraft gegen ein Schwenken aus einer Ausgangsstellung, in welcher das Arbeitswerkzeug (1) in einer nicht geschwenkten Stellung angeordnet ist, in eine geschwenkte Stellung vorzuspannen; wobei eine mittels der Druck-Federeinrichtung an der Arbeitsspitze (2) zur Bodenbearbeitung bereitgestellte Arbeitskraft in einem ersten Schwenkbereich des Arbeitswerkzeugs (1), welcher von der Ausgangsstellung ausgeht, zunehmend und nach Überschreiten eines Scheitelpunkts eines Kurvenverlaufs der Arbeitskraft beim Schwenken in einem zweiten Schwenkbereich des Arbeitswerkzeugs (1), welcher sich zu der geschwenkten Stellung hin erstreckt, abnehmend ausgebildet ist. Weiterhin ist eine landwirtschaftliche Maschine mit der Anordnung geschaffen.

## Beschreibung

Die Erfindung betrifft eine Anordnung mit einem Arbeitswerkzeug zur Bodenbearbeitung für eine landwirtschaftliche Maschine sowie eine landwirtschaftliche Maschine, insbesondere landwirtschaftlichen Bodenbearbeitungsmaschine.

### Hintergrund

Bei landwirtschaftlichen Maschinen dienen Arbeitswerkzeuge zur Bodenbearbeitung dazu, im Betrieb mit einem zu bearbeitenden Boden in Kontakt zu treten und diesen zu bearbeiten. Solche Arbeitswerkzeuge zur Bodenbearbeitung werden an landwirtschaftlichen Bodenbearbeitungsmaschinen verwendet. Beispiele für Bodenbearbeitungsmaschinen sind Egge, Kreiselegge oder Grubber. Einzelne Arbeitswerkzeuge zur Bodenbearbeitung oder Sektionen mit mehreren Arbeitswerkzeugen können aber auch bei anderen landwirtschaftlichen Maschinen vorgesehen sein, zum Beispiel einer Sähmaschine.

Im Dokument EP 2 989 873 A1 ist ein als Spurlockerer ausgeführtes Arbeitswerkzeug zur Bodenbearbeitung für eine landwirtschaftliche Maschine beschrieben. Der gefederter Spurlockerer für die landwirtschaftliche Maschine ist mittels eines eine quer zur Fahrtrichtung verlaufende Gelenkachse aufweisenden Spurlockerergelenks an einem Halter angeordnet und weicht bei einem Auftreten auf ein Hindernis um die Gelenkachse nach hinten und oben gegen die Kraft einer zwischen dem Halter und dem Spurlockerer angeordneten Zugfeder aus. Die Gelenkachse des Spurlockerergelenkes befindet sich im vorderen Bereich des Halters und vorzugsweise vor dem unteren Ende der Spurlockerer, wobei hinter dem Spurlockerergelenk und beabstandet zu diesem mittels eines Gelenkes eine Schubstange an dem Spurlockerer angelenkt ist. An dem oberen Ende der Schubstange greift das eine Ende der Zugfeder an. Die Schubstange ist in ihrem oberen Bereich über zumindest ein Führungselement mit dem Halter in verschiebbarer Weise verbunden. Es ist vorgesehen, dass das Führungselement als Gelenkhebel ausgebildet ist, der einerseits mit dem oberen Ende der Schubstange und andererseits mit dem Halter jeweils über ein Schubstangengelenk verbunden ist.

Mit Hilfe der bei dem bekannten Spurlockerer vorgesehenen Kinematik wird die natürliche Eigenschaft der verwendeten Zugfeder, je größer die Dehnung desto größer die Kraft, zu einer im Wesentlichen konstanten Kraft an der Werkzeugspitze, bezogen auf den gesamten Aushubweg, umgewandelt. Auf diese Weise soll eine Überlastsicherung eine klar definierte Überlastgröße aufweisen, die im Überlastfall währen des gesamten Ausweichwegs (Schwenken des Arbeitswerkzeugs nach hinten und oben) nicht überschritten wird. Die an der Spitze des Arbeitswerkzeugs bereitgestellte Arbeitskraft soll also beim Verschwenken des Arbeitswerkzeugs mit Hilfe der Zugfedereinrichtung über den gesamten Schwenkweg im Wesentlichen konstant gehalten werden.

### Zusammenfassung

Aufgabe der Erfindung ist es, eine Anordnung mit einem Arbeitswerkzeug zur Bodenbearbeitung für eine landwirtschaftliche Maschine sowie eine landwirtschaftliche Maschine zu schaffen, bei denen einerseits eine effiziente Bodenbearbeitung auch bei Böden unterschiedlichen Festigkeit gegeben ist und andererseits eine Ausweichbewegung des Arbeitswerkezugs aufgrund eines Hindernisses im zu bearbeitenden Boden zuverlässig ausführbar ist, um anschließend nach dem Ausweichen die Bodenbearbeitung fortzusetzen.

Zur Lösung sind eine Anordnung mit einem Arbeitswerkzeug zur Bodenbearbeitung für eine landwirtschaftliche Maschine sowie eine landwirtschaftliche Maschine nach den unabhängigen Ansprüchen 1 und 15 geschaffen. Ausgestaltungen sind Gegenstand von abhängigen Unteransprüchen.

Nach einem Aspekt ist eine Anordnung mit einem Arbeitswerkzeug zur Bodenbearbeitung für eine landwirtschaftliche Maschine geschaffen, welches Folgendes aufweist: ein Rahmenbauteil; ein Arbeitswerkzeug zur Bodenbearbeitung mit einer Arbeitsspitze, die im Betrieb mit einem zu bearbeitenden Boden in Kontakt tritt, wobei das Arbeitswerkzeug an dem Rahmenbauteil um eine zu einer Fahrtrichtung quer verlaufende erste Schwenkachse schwenkbar angeordnet ist, derart, dass die Arbeitsspitze beim Schwenken des Arbeitswerkzeugs einen Abstand zum Rahmenbauteil ändert; und eine Vorspannvorrichtung, die mit einer Druck-Federeinrichtung gebildet ist, welche die dem Arbeitswerkzeug zugeordnet und eingerichtet ist, das Arbeitswerkzeug mittels einer Vorspannkraft gegen ein Schwenken aus einer Ausgangsstellung, in welcher das Arbeitswerkzeug in einer nicht geschwenkten Stellung angeordnet ist, in eine geschwenkte Stellung vorzuspannen. Eine an der Arbeits- oder Werkzeugspitze zur Bodenbearbeitung mittels der Druck-Federeinrichtung bereitgestellte Arbeitskraft ist in einem ersten Schwenkbereich des Arbeitswerkzeugs, welcher von der Ausgangsstellung ausgeht, zunehmend und nach Überschreiten eines Scheitelpunkts eines Kurvenverlaufs der Arbeitskraft beim Schwenken in einem zweiten Schwenkbereich des Arbeitswerkzeugs, welcher sich zu der geschwenkten Stellung hin erstreckt, abnehmend ausgebildet.

Nach einem weiteren Aspekt ist eine landwirtschaftliche Maschine mit einer solchen Anordnung geschaffen. Die landwirtschaftliche Maschine kann beispielsweise eine Bodenbearbeitungseinheit aus der folgenden Gruppe aufweisen: Egge, Kreiselegge und Grubber. Einzelne Arbeitswerkzeuge zur Bodenbearbeitung oder Sektionen mit mehreren solchen Anordnungen von Arbeitswerkzeugen können aber auch bei anderen landwirtschaftlichen Maschinen vorgesehen sein, zum Beispiel einer Sähmaschine.

Mit Hilfe der vorgeschlagenen Technologie erfolgt im Betrieb bei der Bodenbearbeitung ein effizientes Zurückschwenken (nach hinten und oben) des Arbeitswerkzeugs in Abhängigkeit vom Bodenwiderstand. Im ersten Schwenkbereich, welcher sich an die nicht-geschwenkte Ausgangsstellung anschließt, findet ein Zurückschwenken des Arbeitswerkzeugs häufig wegen zunehmenden Bodenwiderstands statt. Höherer Bodenwiderstand, zum Beispiel aufgrund höherer Bodenfestigkeit oder -verdichtung, bedeutet ein weiteres Zurückschwenken des Arbeitswerkzeugs. Hierbei nimmt die an der Arbeits- oder Werkzeugspitze des Arbeitswerkzeugs bereitgestellte Arbeitskraft zu, so dass auch Bodenabschnitte mit höherer Bodenfestigkeit angemessen bearbeitet werden können. Erreicht der Kurvenverlauf der Arbeitskraft beim Schwenken des Arbeitswerkzeugs den Scheitelpunkt, ist dies ein Anzeichen dafür, dass das Arbeitswerkzeug auf ein Hindernis im Boden gestoßen ist, beispielsweise einen Stein. Um eine Beschädigung des Arbeitswerkzeugs zu vermeiden, sollte dieses dann sicher und zuverlässig dem Hindernis ausweichen, indem das Arbeitswerkzeug weiter zurückschwenkt. Hierbei nimmt nun die am der Arbeitsspitze des Arbeitswerkzeugs bereitgestellte Arbeitskraft gemäß dem ausgebildeten Kurvenverlauf beim Schwenken wieder ab und ermöglicht so, ein effizientes weiteres Zurückschwenken des Arbeitswerkzeugs, um dem Hindernis auszuweichen. Im Anschluss sorgt die Vorspannvorrichtung dafür, dass das Arbeitswerkzeug wieder in eine Bodenbearbeitungsstellung nach vorne und unten zurückschwenkt. Die nach Durchschreiten des Scheitelpunktes des Kurvenverlaufs (wieder) abnehmende Arbeitskraft an der Spitze des Arbeitswerkzeugs unterstützt, dass das Arbeitswerkzeug beim Ausweichen und einem hierbei häufig auftretenden Kontakt mit dem Hindernis mit gemindertem Widerstand gegen das Hindernis stößt, um so eine Beschädigung des Arbeitswerkzeugs möglichst zu vermeiden. Der vorgesehene Kurvenverlauf der Arbeitskraft wird mittels der dem Arbeitswerkzeug zugeordneten Druck-Federeinrichtung der Vorspannvorrichtung ausgebildet. Aufgrund einer Druckbeaufschlagung wird beim Schwenken des Arbeitswerkzeugs die Arbeitskraft mit Hilfe der Druck-Federeinrichtung an der Arbeits- oder Werkzeugspitze des Arbeitswerkzeugs bereitgestellt.

Mittels der Technologie ist somit erreicht, dass beim Schwenken des Arbeitswerkzeugs einerseits im Anschluss an die nicht-geschwenkte Ausgangsstellung im ersten Schwenkbereich die bereitgestellte Arbeitskraft zunimmt, um auch Böden mit erhöhter Bodenfestigkeit sachgerecht bearbeiten zu können. Nachdem Durchschreiten des Scheitelpunkts des Kurvenverlaufs der Arbeitskraft beim Schwenken, was auf ein Bodenhindernis hinweist, nimmt die am Arbeitswerkzeug bereitgestellte Arbeitskraft wieder ab, um so für das Arbeitswerkzeug ein möglichst Beschädigungsfreies Ausweichen gegenüber dem Hindernis zu unterstützen.

In einer Ausgestaltung kann der Kurvenverlauf der Arbeitskraft nach dem Durchschreiten des Scheitelpunkts bis auf einen Wert der Arbeitskraft wieder abnehmen, der im Wesentlichen gleich der Arbeitskraft in der Ausgangsstellung ist.

Der zweite Schwenkbereich kann sich bis zu einer vollständig geschwenkten Stellung des Arbeitswerkzeugs erstrecken. Bei der Ausführungsform erstreckt sich der Bereich der abnehmenden Arbeitskraft im Kurvenverlauf bis hin zur vollständig (zurück-)geschwenkten Stellung des Arbeitswerkzeugs.

Das Arbeitswerkzeug kann in der vollständig geschwenkten Stellung mittels einer Anschlageinrichtung gegen ein weiteres Schwenken nach hinten und oben blockiert sein. Hierbei kann vorgesehen sein, dass in der vollständig geschwenkten Stellung ein an dem Arbeitswerkzeug gebildetes Anschlagelement, das wahlweise mit einer Hülse oder einem Bolzen gebildet ist, gegen einen Anschlag gedrückt wird. Der Anschlag kann zum Beispiel an einem das Arbeitswerkzeug tragenden Haltebauteil ausgebildet sein, welches seinerseits an dem Rahmenbauteil aufgenommen ist. Das Anschlagelement kann zwischen einander gegenüberliegenden und zugeordneten Elementen des Trägerbauteils für das Arbeitswerkzeug angeordnet sein, beispielwiese zumindest teilweise verdeckt, zum Beispiel mit Blick von der Seite auf die Anordnung mit dem Arbeitswerkzeug, beispielsweise mit Blick quer zur Fahrtrichtung einer landwirtschaftlichen Maschine mit der Anordnung mit dem Arbeitswerkzeug.

Zwischen der Arbeitsspitze und der ersten Schwenkachse kann eine in Bezug auf den Boden aufrechtstehende Verbindungslinie ausgebildet sein, zumindest wenn das Arbeitswerkzeug in der Ausgangsstellung angeordnet ist. Die Verbindungslinie zwischen der Arbeitsspitze und der ersten Schwenkachse verändert sich zu einer Schrägstellung in Bezug auf die aufrechtstehende Verbindungslinie, wenn das Arbeitswerkzeug um die erste Schwenkachse geschwenkt wird.

Der Kurvenverlauf der Arbeitskraft kann wenigstens einer der folgenden Ausgestaltungen entsprechend ausgebildet sein: kontinuierlich zunehmend im ersten Schwenkbereich bis hin zum Scheitelpunktbereich und kontinuierlich abnehmend im zweiten Schwenkbereich bis hin zur geschwenkten Stellung hin. Im ersten und / oder im zweiten Schwenkbereich kann der Kurvenverlauf der Arbeitskraft einen gekrümmten Kurvenverlauf aufweisen.

Die mittels der Vorspannvorrichtung zum Vorspannen des Arbeitswerkzeugs bereitgestellte Vorspannkraft kann mittels einer der Vorspanneinrichtung zugeordneten Einstelleinrichtung mindestens zwischen einer ersten und einer zweiten Vorspannkraft verstellbar sein, die von der ersten Vorspannkraft verschieden ist. Das Einstellen der Vorspannkraft bedingt ein Einstellen der Arbeitskraft im Bereich der Werkzeugspitze bei der Bodenbearbeitung. Die Einstelleinrichtung kann eine manuell zu bedienende Einstelleinrichtung sein. Das Verstellen der Einstelleinrichtung führt dazu, dass die von der Vorspannvorrichtung dem Schwenken des Arbeitswerkzeugs aus der Ausgangsstellung entgegengesetzte Vorspannkraft sich verändert. Beispielsweise kann mit der Einstelleinrichtung die Längserstreckung eine Feder der Vorspannvorrichtung verkürzt oder verlängert werden, um die Vorspannkraft einzustellen.

Die Vorspannkraft kann mittels der Einstelleinrichtung zwischen der ersten und der zweiten Vorspannkraft kontinuierlich verstellbar sein. Eine kontinuierliche Verstellbarkeit kann beispielsweise mittels eines Schraubmechanismus ausgeführt sein, bei dem eine Schraubmutter entlang eines zugeordneten Schraubgewindes verlagert wird, um unterschiedliche Vorspannkräfte einzustellen.

Die Vorspannvorrichtung kann mit einer ersten und einer zweiten Vorspannvorrichtung gebildet sein, die auf gegenüberliegenden Seiten des Arbeitswerkzeugs angeordnet sind. Die erste und die zweite Vorspanneinrichtung können jeweils separat hinsichtlich der jeweils bereitgestellten Vorspannkraft einstellbar sein.

Die Druck-Federeinrichtung kann mit mindestens einem Federelement oder -system aus der folgende Gruppe gebildet sein: Torsionsfederelement, Blattfederelement, pneumatisches Druck-Federsystem und hydraulisches Druck-Federsystem. Das pneumatische und / oder das hydraulische Druck-Federsystem können mit einem Pneumatik- / Hydraulik-Zylinder sowie einem zugeordneten Membranspeicher gebildet sein. Im Fall der ersten und der zweiten Vorspannvorrichtung können diese mit einer jeweiligen getrennt gebildeten oder einer gemeinsamen Druck-Federeinrichtung ausgeführt sein.

Das Arbeitswerkzeug kann zum Einstellen einer Arbeitstiefe höhenverstellbar an dem Rahmenbauteil angeordnet sein. Beispielsweise kann eine manuelle Verstellbarkeit der Höhe des Arbeitswerkzeugs an dem Rahmenbauteil ausgebildet sein.

Die Vorspannvorrichtung kann um eine zweite Schwenkachse, die von der ersten Schwenkachse verschieden ist, schwenkbar mit dem Arbeitswerkzeug verbunden sein, wobei die zweite Schwenkachse der ersten Schwenkachse in Fahrtrichtung nachgelagert oder vorgelagert angeordnet ist, zumindest wenn das Arbeitswerkzeug in der Ausgangsstellung angeordnet ist.

Die zweite Schwenkachse kann in eine Stellung oberhalb oder unterhalb der ersten Schwenkachse verlagert sein, zumindest wenn das Arbeitswerkzeug in die vollständig geschwenkte Stellung verlagert ist.

Das Arbeitswerkzeug kann über einen Werkzeughalter mit dem Rahmenbauteil verbunden sein. Der Werkzeughalter kann ein- oder mehrstückig ausgebildet sein. Zum Einstellen einer Arbeitstiefe kann der Werkzeughalter höhenverstellbar an dem Rahmenbauteil aufgenommen sein. Das Rahmenbauteil kann bei dieser oder anderen Ausführungsformen Teil einer ein- oder mehrstückigen Rahmenkonstruktion sein. Die Vorspannvorrichtung kann gelenkig sowohl mit dem Arbeitswerkzeug wie auch dem Werkzeughalter verbunden sein. Mittels der Lagerung der Vorspannvorrichtung am Werkzeughalter ist dann eine dritte Schwenkachse ausgebildet, die von der ersten und der zweiten Schwenkachse verschieden ist. Zumindest in der Ausgangsstellung des Arbeitswerkzeugs kann sich eine Verbindungslinie zwischen der zweiten und der dritten Schwenkachse im Wesentlichen in vertikaler Richtung erstrecken. Wird das Arbeitswerkzeug aus der Ausgangsstellung in geschwenkte Stellungen verlagert, neigt sich diese Verbindungslinie zunehmend. Die erste und die zweite Vorspannvorrichtung können auf gegenüberliegenden Seiten des Werkzeughalters montiert und jeweils getrennt mit dem Arbeitswerkzeug einerseits und dem Werkzeughalter andererseits verbunden sein. Ist das Arbeitswerkzeug in die vollständig geschwenkte Stellung verlagert, kann ein Abschnitt des Werkzeughalters den Anschlag für das Arbeitswerkzeug bilden, so dass ein weiteres Verschwenken blockiert ist.

Das Arbeitswerkzeug kann mit einem Zinkenwerkzeug gebildet sein, bei dem die Arbeitsspitze mit einer Zinkenspitze ausgeführt ist. Bei dem Arbeitswerkzeug kann das Zinkenwerkzeug an einem Trägerbauteil angeordnet sein, so dass Trägerbauteil und Zinkenwerkzeug beim Verschwenken des Arbeitswerkzeugs gemeinsam schwenken.

Die vorangehend für die Anordnung mit dem Arbeitswerkzeug zur Bodenbearbeitung erläuterten Ausgestaltungen können in Verbindung mit der landwirtschaftlichen Maschine, die eine solche Anordnung aufweist, entsprechend vorgesehen sein.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische perspektivische Darstellung einer Anordnung mit einem Arbeitswerkzeug zur Bodenbearbeitung;
- Fig. 2: eine schematische perspektivische Darstellung der Anordnung aus Fig. 1, wobei eine Vorspannvorrichtung einseitig abgenommen ist;
- Fig. 3: eine schematische Darstellung der Anordnung aus Fig. 1, wobei ein Arbeitswerkzeug aus einer Ausgangsstellung in eine vollständig geschwenkte Stellung verlagert ist;
- Fig. 4: eine schematische Darstellung der Anordnung aus Fig. 1, wobei das Arbeitswerkzeug hinsichtlich seiner Höhe in Bezug auf ein Rahmenbauteil verändert eingestellt ist; und
- Fig. 5: eine grafische Darstellung für eine Kurvenverlauf einer an einer Arbeitsspitze des Arbeitswerkzeugs bereitgestellten Arbeitskraft für einen Schwenkvorgang des Arbeitswerkzeugs.

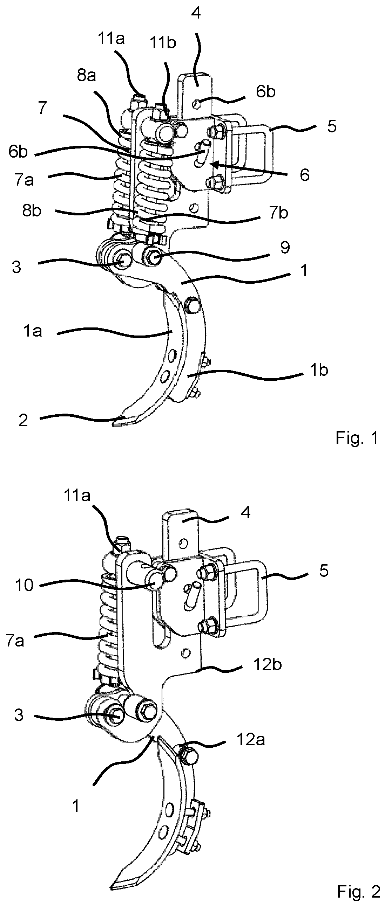

Fig. 1 zeigt eine schematische perspektivische Darstellung einer Anordnung mit einem Arbeitswerkzeug 1 zur Bodenbearbeitung für eine landwirtschaftliche Maschine. Das Arbeitswerkzeug 1 ist bei dem gezeigten Ausführungsbeispiel mit einem Zinkenwerkzeug 1a und einem Trägerbauteil 1b gebildet. In Betrieb zur Bodenbearbeitung tritt insbesondere eine Arbeits- oder Werkzeugspitze 2 mit dem zu bearbeitenden Boden in Kontakt.

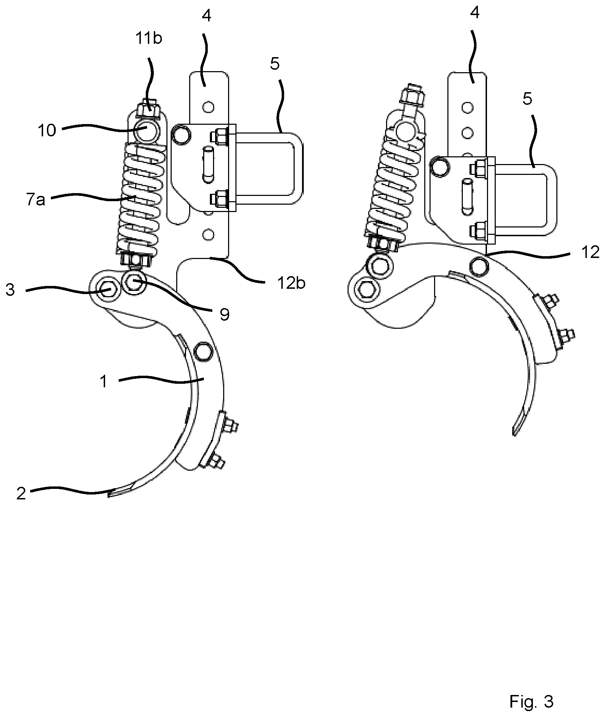

Das Arbeitswerkzeug 1 ist um eine erste Schwenkachse 3 schwenkbar (vgl. auch Fig. 3 unten). Bei dem gezeigten Beispiel ist das Arbeitswerkzeug 1 an einem im gezeigten Ausführungsbeispiel einstückig ausgeführten Werkzeughalter 4 angeordnet, welcher mit Hilfe einer Montageeinrichtung 5 an einem Rahmenbauteil (nicht dargestellt) einer landwirtschaftlichen Maschine montierbar ist. Der Werkzeughalter 4 ist mit einer Höhenverstelleinrichtung 6 ausgeführt, die es erlaubt, eine Arbeitstiefe für das Arbeitswerkzeug 1 einzustellen, in dem eine Relativlage des Arbeitswerkzeugs 1 in Bezug auf das Rahmenbauteil der landwirtschaftlichen Maschine in vertikaler Richtung veränderbar ist. Die Höhenverstelleinrichtung 6 weist hierzu bei dem gezeigten Beispiel einen Stiftbolzen 6a sowie zugeordnete Durchbrüche 6b auf. Alternative Verstellmechanismen wie Schiebeverstellung oder Drehkurbel können vorgesehen sein.

Mit Hilfe einer Vorspannvorrichtung 7, die beim gezeigten Beispiel eine erste Vorspannvorrichtung 7a und eine zweite Vorspannvorrichtung 7b aufweist, welche in Bezug auf den Werkzeughalter 4 gegenüberliegend angeordnet. Die erste und die zweite Vorspannvorrichtung 7a, 7b sind mit einer jeweiligen Druck-Federeinrichtung 8a, 8b gebildet, welche eine jeweilige Torsionsfeder aufweisen. Alternativ hierzu kann die Druck-Federeinrichtung bei anderen Ausführungsformen mit einem Blattfederelement, einem pneumatischen Druck-Federsystem und / oder einem hydraulischen Druck-Federsystem ausgeführt sein kann.

Die Druck-Federeinrichtungen 8a, 8b sind um eine zweite Schwenkachse 9 an dem Arbeitswerkzeug 1 sowie eine dritte Schwenkachse 10 an dem Werkzeughalter 4 (vgl. Fig. 2) jeweils schwenkbar gelagert. Eine jeweilige Einstelleinrichtung 11a, 11b der ersten und der zweiten Vorspannvorrichtung 7a, 7b ermöglichen es, eine von der Vorspannvorrichtung 7 bereitgestellte Vorspannkraft kontinuierlich einzustellen, die dann zu einer bereitgestellten Arbeitskraft an der Arbeitsspitze 2 umgesetzt wird.

Fig. 2 zeigt eine schematische perspektivische Darstellung der Anordnung aus Fig. 1, wobei die zweite Vorspannvorrichtung 7b nicht montiert ist. Das Trägerbauteil 1b ist zweiteilig und doppelseitig des Werkzeughalters 4 ausgebildet und beidseitig hiervon um die erste Schwenkachse verdrehbar gelagert.

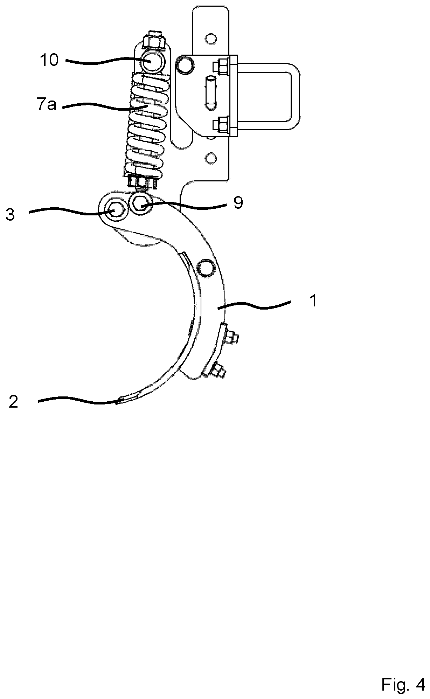

Fig. 3 und 4 zeigen schematische Darstellungen der Anordnung aus Fig. 1 von der Seite.

Auf der linken Seite in Fig. 3 ist das Arbeitswerkzeug 1 in einer (nicht-geschwenkten) Ausgangsstellung gezeigt. Eine Verbindungslinie zwischen der ersten Schwenkachse 3 und der Arbeitsspitze 2 verläuft im Wesentlichen in horizontaler Richtung. Die zweite Schwenkachse 9 ist in Fahrtrichtung (von rechts nach links in Fig. 3) der ersten Schwenkachse 3 nachgelagert. Auch eine Verbindungslinie zwischen der zweiten und der dritten Schwenkachse 9, 10 erstreckt sich im Wesentlichen in vertikaler oder aufrechtstehender Richtung.

Trifft das Arbeitswerkzeug 1 bei der Bodenbearbeitung auf Widerstand, so schwenkt das Arbeitswerkzeug 1 um die erste Schwenkachse 3 zurück und nach oben. Auf der rechten Seite in Fig. 3 ist eine vollständig geschwenkte Stellung für das Arbeitswerkzeug 1 gezeigt. Bei dem Beispiel ist die Arbeitsspitze des Arbeitswerkzeugs 1 gegenüber dem Boden um eine Höhe h angehoben, zum Beispiel bis zu etwa 100mm. Die auf der rechten Seite in Fig. 3 gezeigte Stellung des Arbeitswerkzeugs 1 ist die vollständig zurückgeschwenkte Stellung, eine weitere Verschwenkung ist nicht möglich, was eine Anschlageinrichtung 12 verhindert, bei der ein Anschlagelement 12a, das beispielweise mit einer Anschlaghülse oder einem Anschlagbolzen gebildet ist, am Arbeitswerkzeug 1 an einem zugeordneten Abschnitt 12b des Werkzeughalters 4 anliegt (vgl. auch Fig. 2). Das Anschlagelement 12a ist bei dem gezeigten Beispiel zwischen einander gegenüberliegenden und zugeordneten Elementen des Trägerbauteils 1b für das Arbeitswerkzeug 1 angeordnet und zumindest teilweise verdeckt, wenigstens mit Blick von der Seite auf die Anordnung mit dem Arbeitswerkzeug 1.

In der vollständig geschwenkten Stellung gemäß Fig. 3 (vgl. rechte Seite) ist die zweite Schwenkachse 9 in eine Stellung oberhalb der ersten Schwenkachse 3 verlagert. Die Verbindungslinie zwischen der zweiten und der dritten Schwenkachse 9, 10 ist zur ursprünglichen Verbindungslinie schräg gestellt.

Gemäß Fig. 4 kann das Arbeitswerkzeug 1 mit Hilfe der Höhenverstelleinrichtung 6 höhenverstellt werden.

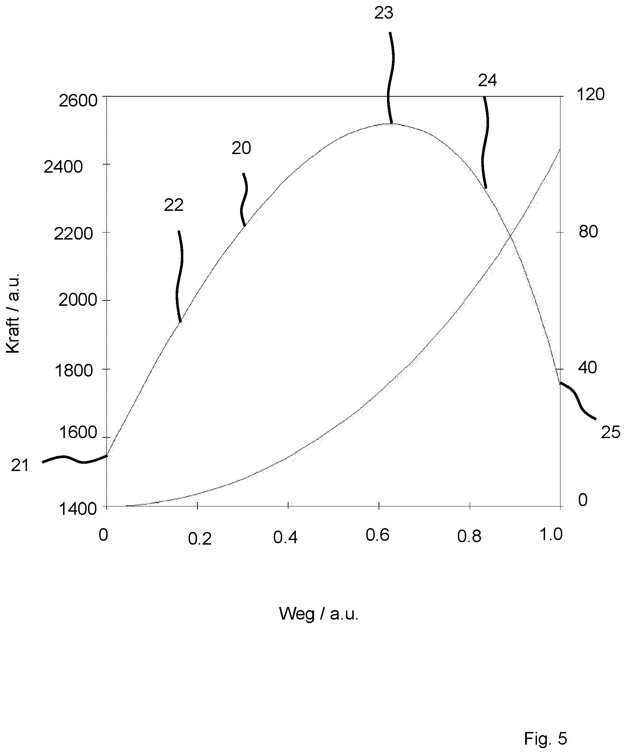

Fig. 5 zeigt eine grafische Darstellung für den Kurvenverlauf 20 einer an der Arbeitsspitze 2 mit Hilfe der Druck-Federeinrichtungen 8a, 8b der Vorspannvorrichtung 7 bereitgestellten Arbeitskraft für einen Schwenkvorgang des Arbeitswerkzeugs 1. Der weitere Kurvenverlauf 30 zeigt das Anheben des Arbeitswerkzeugs 1 bzw. der Arbeitsspitze 2 beim Schwenkverlauf. Ausgehend von der Ausgangsstellung 21 nimmt beim Schwenken die Arbeitskraft gemäß dem Kurvenverlauf 20 zu, je weiter das Arbeitswerkzeug 1 gegenüber der Ausgangsstellung 21 zurück oder nach oben geschwenkt wird. Die Zunahme findet in einem ersten Schwenkbereich 22 bis zu einem Scheitelpunkt 23 statt. Danach nimmt die Arbeitskraft gemäß dem Kurvenverlauf 21 in einem zweiten Schwenkbereich 24 wieder ab bis hin zu der vollständig geschwenkten Stellung 25. Auf diese Weise ist es ermöglicht, dass in dem ersten Schwenkbereich 22, der sich an die Ausgangsstellung 20 anschließt, auch Böden mit höherer Bodenfestigkeit (zunehmender Widerstand am Arbeitswerkzeug 1) sachgerecht bearbeitet werden. Wenn der Bodenwiderstand am Scheitelpunkt 22 weiter zunimmt und das Arbeitswerkzeug 1 hierdurch weiter geschwenkt wird, was auf das Auftreffen des Arbeitswerkzeugs 1 auf ein Hindernis, zum Beispiel einen Stein hindeutet, nimmt die Arbeitskraft nach dem Kurvenverlauf 20 in dem zweiten Schwenkbereich 24 wieder ab, was das Ausweichen des Arbeitswerkzeugs 1 gegenüber dem Hindernis erleichtert.

Beispielsweise kann die mittels der Vorspannvorrichtung 7 bereitgestellt Arbeitskraft in dem ersten Schwenkbereich 22 um etwa 50 bis 150% gegenüber dem Wert in der Ausgangsstellung 21 bis zum Scheitelpunkt 23 hin zunehmen, um dann im zweiten Schwenkbereich 24 in der vollständig geschwenkten Stellung 25 bis auf einen Wert der Arbeitskraft abnehmen, welcher ähnlich der Arbeitskraft in der Ausgangsstellung 21 oder demgegenüber um bis zu etwa 30 bis 40% erhöht ist.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Anordnung mit einem Arbeitswerkzeug zur Bodenbearbeitung für eine landwirtschaftliche Maschine, mit:
- einem Rahmenbauteil;
- einem Arbeitswerkzeug (1) zur Bodenbearbeitung mit einer Arbeitsspitze (2), die im Betrieb mit einem zu bearbeitenden Boden in Kontakt tritt, wobei das Arbeitswerkzeug (1) an dem Rahmenbauteil um eine zu einer Fahrtrichtung quer verlaufende erste Schwenkachse (3) schwenkbar angeordnet ist, derart, dass das Arbeitswerkzeug (1) beim Schwenken des Arbeitswerkzeugs (1) einen Abstand zum Rahmenbauteil ändert; und
- einer Vorspannvorrichtung (7), die mit einer Druck-Federeinrichtung gebildet ist, welche dem Arbeitswerkzeug (1) zugeordnet und eingerichtet ist, das Arbeitswerkzeug (1) mittels einer Vorspannkraft gegen ein Schwenken aus einer Ausgangsstellung (21), in welcher das Arbeitswerkzeug (1) in einer nicht geschwenkten Stellung angeordnet ist, in eine geschwenkte Stellung vorzuspannen;
wobei eine mittels der Druck-Federeinrichtung an der Arbeitsspitze (2) zur Bodenbearbeitung bereitgestellte Arbeitskraft in einem ersten Schwenkbereich (22) des Arbeitswerkzeugs (1), welcher von der Ausgangsstellung (21) ausgeht, zunehmend und nach Überschreiten eines Scheitelpunkts (23) eines Kurvenverlaufs (20) der Arbeitskraft beim Schwenken in einem zweiten Schwenkbereich (24) des Arbeitswerkzeugs (1), welcher sich zu der geschwenkten Stellung hin erstreckt, abnehmend ausgebildet ist.

2. Anordnung nach Anspruch 1, **dadurch gekennzeichnet, dass** sich der zweite Schwenkbereich (24) bis zu einer vollständig geschwenkten Stellung (25) des Arbeitswerkzeugs (1) erstreckt.

3. Anordnung nach Anspruch 2, **dadurch gekennzeichnet, dass** das Arbeitswerkzeug (1) in der vollständig geschwenkten Stellung (25) mittels einer Anschlageinrichtung (12) gegen ein weiteres Schwenken blockiert ist.

4. Anordnung nach mindestens einem der vorangehenden Ansprüche, **dadurch gekennzeichnet, dass** zwischen der Arbeitsspitze (2) und der ersten Schwenkachse (3) eine in Bezug auf den Boden aufrechtstehende Verbindungslinie ausgebildet ist, zumindest wenn das Arbeitswerkzeug (1) in der Ausgangsstellung angeordnet ist.

5. Anordnung nach mindestens einem der vorangehenden Ansprüche, **dadurch gekennzeichnet, dass** der Kurvenverlauf (20) der Arbeitskraft wenigstens einer der folgenden Ausgestaltungen entsprechend ausgebildet ist:
- kontinuierlich zunehmend im ersten Schwenkbereich (22) bis hin zum Scheitelpunkt (23) und
- kontinuierlich abnehmend im zweiten Schwenkbereich (24) bis hin zur geschwenkten Stellung hin.

6. Anordnung nach mindestens einem der vorangehenden Ansprüche, **dadurch gekennzeichnet, dass** die mittels der Vorspannvorrichtung (7) zum Vorspannen des Arbeitswerkzeugs (1) bereitgestellte Vorspannkraft mittels einer der Vorspanneinrichtung (7) zugeordneten Einstelleinrichtung (11a; 11b) mindestens zwischen einer ersten und einer zweiten Vorspannkraft verstellbar ist, die von der ersten Vorspannkraft verschieden ist.

7. Anordnung nach Anspruch 6, **dadurch gekennzeichnet, dass** die Vorspannkraft mittels der Einstelleinrichtung (11a; 11b) zwischen der ersten und der zweiten Vorspannkraft kontinuierlich verstellbar ist.

8. Anordnung nach mindestens einem der vorangehenden Ansprüche, **dadurch gekennzeichnet, dass** die Vorspannvorrichtung (7) mit einer ersten und einer zweiten Vorspannvorrichtung (7a, 7b) gebildet ist, die auf gegenüberliegenden Seiten des Arbeitswerkzeugs (1) angeordnet sind.

9. Anordnung nach mindestens einem der vorangehenden Ansprüche, **dadurch gekennzeichnet, dass** die Druck-Federeinrichtung aus der folgende Gruppe ausgewählt ist: Torsionsfederelement, Blattfederelement, pneumatisches Druck-Federsystem und hydraulisches Druck-Federsystem.

10. Anordnung nach mindestens einem der vorangehenden Ansprüche, **dadurch gekennzeichnet, dass** das Arbeitswerkzeug (1) zum Einstellen einer Arbeitstiefe höhenverstellbar an dem Rahmenbauteil angeordnet ist.

11. Anordnung nach mindestens einem der vorangehenden Ansprüche, **dadurch gekennzeichnet, dass** die Vorspannvorrichtung (7) um eine zweite Schwenkachse (9), die von der ersten Schwenkachse (3) verschieden ist, schwenkbar mit dem Arbeitswerkzeug (1) verbunden ist, wobei die zweite Schwenkachse (9) der ersten Schwenkachse (3) in Fahrtrichtung nachgelagert angeordnet ist, zumindest wenn das Arbeitswerkzeug (1) in der Ausgangsstellung (21) angeordnet ist.

12. Anordnung nach Anspruch 11, **dadurch gekennzeichnet, dass** die zweite Schwenkachse (9) in eine Stellung oberhalb der ersten Schwenkachse (3) verlagert ist, zumindest wenn das Arbeitswerkzeug (1) in die vollständig geschwenkte Stellung (25) verlagert ist.

13. Anordnung nach mindestens einem der vorangehenden Ansprüche, **dadurch gekennzeichnet, dass** das Arbeitswerkzeug (1) über einen Werkzeughalter (4) mit dem Rahmenbauteil verbunden ist.

14. Anordnung nach mindestens einem der vorangehenden Ansprüche, **dadurch gekennzeichnet, dass** das Arbeitswerkzeug (1) mit einem Zinkenwerkzeug gebildet ist, bei dem die Arbeitsspitze (2) mit einer Zinkenspitze ausgeführt ist.

15. Landwirtschaftliche Maschine, aufweisend eine Anordnung nach mindestens einem der vorangehenden Ansprüche.
